## Europäisches Patentamt
## European Patent Office
## Office européen des brevets

(11) Veröffentlichungsnummer: **0 047 836**
**B1**

(12) **EUROPÄISCHE PATENTSCHRIFT**

(45) Veröffentlichungstag der Patentschrift:
15.06.83

(51) Int. Cl.³: **B 01 D 25/18,** B 01 D 33/10

(21) Anmeldenummer: **81105589.6**

(22) Anmeldetag: **16.07.81**

(54) **Spaltfilter.**

(30) Priorität: **13.09.80 DE 3034678**

(43) Veröffentlichungstag der Anmeldung:
**24.03.82 Patentblatt 82/12**

(45) Bekanntmachung des Hinweises auf die Patenterteilung:
**15.06.83 Patentblatt 83/24**

(84) Benannte Vertragsstaaten:
**CH DE FR GB LI SE**

(56) Entgegenhaltungen:
**FR-A-1 213 274**
**FR-A-1 227 991**
**FR-A-2 204 443**
**GB-A-688 265**
**MACHINERY AND PRODUCTION ENGINEER-ING,   Band 118, Nr. 3058, 23. Juni 1971, Seiten 962—963, Burgess Hill Sussex, G. B. »Euroflow coolant filters«**

(73) Patentinhaber: **Klöckner-Humboldt-Deutz Aktiengesellschaft,
Deutz-Mülheimer-Strasse 111 Postfach 80 05 09,
D-5000 Köln 80 (DE)**

(72) Erfinder: **Hünten, Dieter, Dipl.-Ing., Weyerhardt 11,
D-5060 Bergisch Gladbach 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Spaltfilter

Die Erfindung betrifft einen Spaltfilter für Schmieröl o. dgl. mit partieller Rückströmung zur Selbstreinigung, mit einem zylindrischen Gehäuse und einem darin drehbaren zylindrischen Filtereinsatz, je einer außerhalb der Mantelfläche des Filtereinsatzes im Gehäuse angeordneten Zuströmöffnung und Ausspülöffnung sowie einer an einer Stirnfläche des Filtereinsatzes im Gehäuse angeordneten Abströmöffnung, einem längs eines Mantelbereiches des Filtereinsatzes anliegenden Abstreifkörper und einer ein Segment des Filtereinsatzes umfassenden und zur Ausspülöffnung offenen Spülkanalwandung mit U-förmigem Querschnitt.

Es ist ein Spaltfilter der genannten Gattung bereits bekannt geworden (GB-A-1 113 114). Diese Anordnung hat den wesentlichen Nachteil, daß die Spülkanalwandung nicht dichtend am Filtereinsatz anliegt, so daß ein ständiger Lecköreolverlust vom äußeren Ringraum außerhalb des Filtereinsatzes zum Spülkanal hin stattfindet. Dies bewirkt einen unerwünschten Druckverlust am Filter. Ein weiterer Nachteil ist darin zu sehen, daß nie die Oberfläche des gesamten Filtereinsatzes zu Filterzwecken zur Verfügung steht, sondern ständig ein Segment vom Abstreifkörper verschlossen wird bzw. in umgekehrter Richtung von innen nach außen durchströmt wird. Dadurch ist das Filter gegenüber einem solchen mit vollständig beaufschlagbarem Filtereinsatz größer auszulegen.

Der Erfindung liegt die Aufgabe zugrunde, ein während des Betriebes zu reinigendes Filter zu schaffen, das im Dauerbetrieb eine maximale Filterfläche bezüglich der Gesamtabmessung aufweist, nur minimale Lecköverluste zuläßt, und sich durch einfachen und betriebssicheren Aufbau auszeichnet.

Die Aufgabe wird erfindungsgemäß dadurch gelöst, daß die Spülkanalwandung mit dem in Drehrichtung hinteren Schenkel den Abstreifkörper bildet und mit dem Filtereinsatz in dauernder Berührung steht, daß die Spülkanalwandung ein Verstellglied zum Abheben und Andrücken des vorderen Schenkels an den Filtereinsatz aufweist und daß die Ausspülöffnung ein zum Spülvorgang freigebbares Absperrorgan aufweist.

Im Dauerbetrieb ist das Absperrorgan an der Ausspülöffnung geschlossen und die vordere Kante der Spülkanalwandung vom Filtereinsatz entfernt. Das durch die Zuströmöffnung im Gehäuse außerhalb des Filtereinsatzes eintretende Schmutzöl hat auf dem gesamten Umfang zum Filtereinsatz Zugang und durchströmt diesen bei gleichmäßiger Druckverteilung an der gesamten Oberfläche. Hierdurch ist in vorteilhafter Weise bei vorgegebenen Außenabmessungen des Filters die größtmögliche Durchsatzmenge bzw. der geringste Druckverlust gegeben. Das gefilterte Öl tritt an einer Stirnfläche des Filtereinsatzes aus dessen Inneren gegebenenfalls in einen Sammelraum über und durch die Abströmöffnung aus dem Gehäuse aus.

Zur Reinigung des Filters wird in einem ersten Vorgang der Einsatz in der vorgegebenen Richtung auf seiner Achse mit einem außerhalb des Gehäuses angebrachten Handrad o. dgl. um zumindest 360° gedreht, wobei sich vor dem Abstreifkörper der außen am Filtereinsatz angelagerte Schmutz längs der anliegenden Kante der Spülkanalwandung ansammelt. Das Filter bleibt dabei in unveränderter Weise mit nun wieder gereinigtem Filtereinsatz in Betrieb. Vorzugsweise unmittelbar nach diesem Abstreifvorgang wird durch die Verstellvorrichtung die vordere Kante der Spülkanalwandung an den Filtereinsatz angedrückt und das Absperrorgan an der Ausspülöffnung freigegeben. Hierdurch setzt der Ausspülvorgang ein, bei dem das gegenüber dem Ausspülrücklauf unter höherem Druck stehende Reinöl im Innern des Filtereinsatzes im Bereich des Spülkanals in eine Rückströmung durch das entsprechende Segment des Filtereinsatzes übergeht und den vom Abstreifkörper angesammelten Schlamm aus dem Spülkanal austrägt. Beim Abstreifen der Verunreinigungen besteht die Gefahr, daß einzelne Schmutzteilchen in die Filterspalte hineingedrückt werden und sich dort festsetzen. Dies kann dadurch behoben werden, daß während des Ausspülvorgangs der Filtereinsatz um weitere 360° gedreht wird, so daß durch jeden Bereich des Spaltzylinders ausgespült wird. Der anschließend am Filter meßbare Druckverlust erreicht hierdurch nach Messungen wieder den Neuzustand.

Besonderer Vorteil der erfindungsgemäßen Anordnung ist es, daß zunächst die gesamte Filterfläche durch den Abstreifer wieder vollständig gereinigt wird, bevor zum Ausspülen der Verunreinigungen die Filterfläche um das dem Spülkanal benachbarte Segment geringfügig verkleinert wird. Der durch die verkleinerte Filterfläche höhere Druckverlust tritt daher nur bei sauberem Filter ein und ist dabei geringer als bei höchstverschmutztem, vollständig durchströmten Filtereinsatz. Nach dem kurzen Spülvorgang wird das Absperrorgan wieder geschlossen und die Spülkanalwandung durch das Verstellglied an der vorderen Kante bis zum nächsten Reinigungsvorgang des Filters wieder abgehoben.

Eine besonders günstige erfindungsgemäße Ausführung der Spülkanalwandung und des Verstellgliedes besteht darin, daß außerhalb des Spülkanals eine gegen das Gehäuse abgestützte Feder zum Andrücken der Spülkanalwandung an den Filtereinsatz angeordnet ist, daß innerhalb des Spülkanals oder eines an der Spülkanalwandung angebrachten Ansatzes sich ein mit einer achsparallelen Stange drehbarer Nocken zum Abheben der Spülkanalwandung vom Filtereinsatz befindet und daß die Spülkanalwandung am beweglichen Schenkel zumindest an den Stirnenden eine auf gehäusefesten Zapfen oder einer achsparallelen Stange gleitende Führung aufweist, die unter einem Winkel zur Radialen angeordnet und nach innen gegen den hinteren Schenkel der Spülkanalwandung geneigt ist. Hiermit ist zum einen durch Stange und Nocken ein einfaches Verstellglied gegeben, das besonders günstig mit einem einfachen Stahldrahtbügel als Feder zusammenwirken kann, zum andern ergibt sich durch die geneigte Anordnung der Führung für den Ausspülvorgang der besondere Vorteil, daß der Abstreifkörper sich beim Andrücken der Spülkanalwandung tangential am Filtereinsatz ein Stück von angesammelten Schmutz entfernt, wodurch dieser frei im Spülkanal liegt und die Gefahr verringert wird, daß ein Teil des Schmutzes längs einer Kante unvollständig ausgespült wird. In besonders günstiger Ausführung sind jeweils achsparallele, in den Stirnflächen des Filters gelagerte Stangen oder Zapfen zur Halterung der Feder, zur Führung des Spülkanals und zur Verstellung des Nockens vorgesehen. Die erfindungsgemäße Ausführung stellt eine einfache und betriebssichere Anordnung dar.

Die gesamte Anordnung ist vorzugsweise für Drahtspaltfilter vorgesehen, bei denen eine glatte Kante des Abstreifkörpers am Spaltzylinder ein befriedigendes Abstreifen sicherstellt. Hiermit ist die einfachste und unkomplizierteste Ausführung gegeben. Sofern anstelle eines Drahtnetzwerkes für den Spaltzylinder eine andere Konstruktion tritt, wie z. B. schichtweise angeordnete, mit Ausnehmungen versehene Scheiben verschiedenen Durchmessers, ist die Oberfläche des Abstreifkörpers entsprechend zu gestalten, z. B. als in die Rücksprünge des Spaltzylinders eingreifender Kamm.

Zur Erläuterung der Funktion und des Aufbaus des Spaltfilters dienen die Abbildungen.

Fig. 1 zeigt einen Querschnitt durch das Spaltfilter während des Normalbetriebs,

Fig. 2 zeigt einen Querschnitt durch das Spaltfilter während des Spülvorgangs,

Fig. 3 zeigt einen Längsschnitt durch das Spaltfilter.

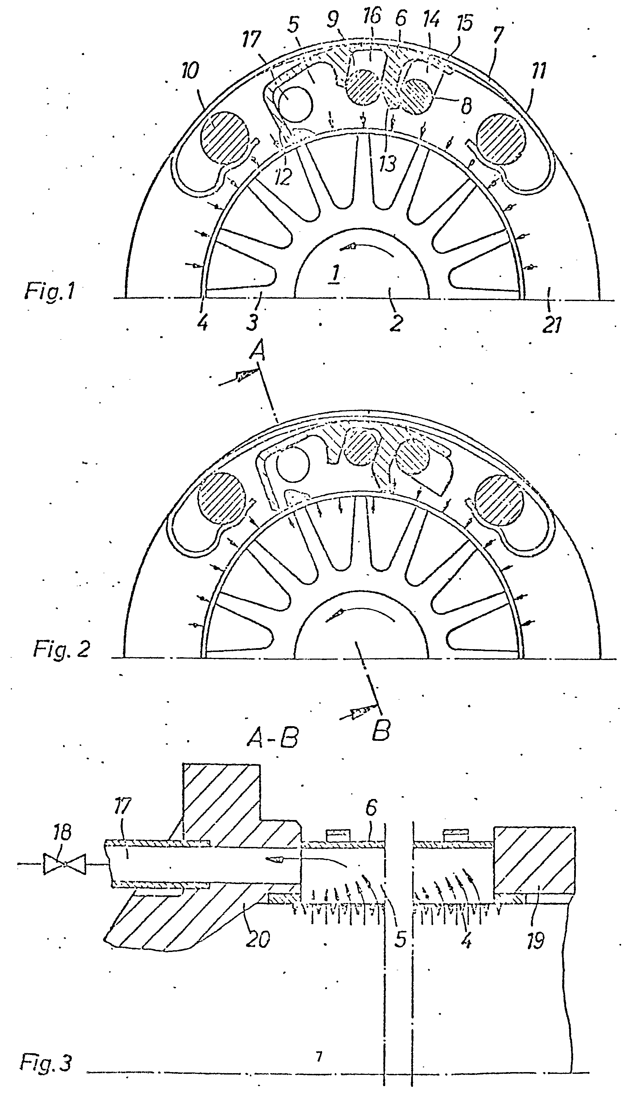

In Fig. 1 ist mit 1 der Filtereinsatz bezeichnet, der aus der Drehachse 2, einem Trägerstern 3 und dem Spaltzylinder 4 besteht. Der Filtereinsatz 1 ist drehbar gegenüber einer gehäusefesten Stirnplatte 21, die zusammen mit einer weiteren vorderen Stirnplatte 19 die Zapfen oder Stangen 8, 9, 10, 11 trägt. Eine Feder 7 wird von zwei achsparallelen Stangen 10 und 11 gehalten und drückt die Spülkanalwandung 6 gegen den Filtereinsatz 1. Die Spülkanalwandung 6 liegt mit dem in Drehrichtung hinteren Schenkel 12 am Spaltzylinder 4 an, während der vordere Schenkel 13 durch den Nocken 14 des Verstellgliedes vom Filtereinsatz abgehoben wird. Axial gesehen innerhalb des Spülkanals 5 ist in der Stirnplatte 20 die Ausspülöffnung 17 angeordnet.

Durch eine nicht dargestellte Zuströmöffnung im Gehäuse tritt das Schmutzöl außerhalb des Spaltzylinders 4 in das Spaltfilter ein und durchströmt den Filtereinsatz auf dem gesamten Umfang von außen nach innen. Ist eine bestimmte Betriebsdauer oder der höchstzulässige Grad der Filterverschmutzung eingetreten, so wird der Filtereinsatz 1 in dem durch den Pfeil angedeuteten Sinn um mindestens 360° auf der Drehachse 2 gedreht. Am Abstreifkörper sammelt sich dabei der am Spaltzylinder 4 angelagerte Schmutz an.

Fig. 2 zeigt die zweite Phase des Reinigungsvorganges, bei dem durch Verdrehen des Nockens 14 mit der Stange 8 die Spülkanalwandung 6 von der Feder 7 auch mit der vorderen Kante 13 zur Anlage am Spaltzylinder 4 gebracht wird, wodurch der Spülkanal 5 als solcher abgeschlossen wird und das betreffende Segment des Spaltzylinders 4 von der vorherigen Durchströmungseinrichtung ausgenommen wird. Nach dem Öffnen des Absperrorgans 18 an der Ausspülöffnung 17 findet in diesem Segment eine umgekehrte Durchströmung vom Inneren des Spaltzylinders 4 ins Innere des Spülkanals 5 und zur Ausspülöffnung 17 hin statt. Bei einem Wegschwenken des Nockens 14 vom Ansatz 15 an der Spülkanalwandung 6 bewegt sich diese auf der durch das Zusammenwirken der Führungsstange 9 und der Führung 16 vorgegebenen Bahn. Durch die Anstellung der Führung 16 zur Radialen wird gleichzeitig eine tangentiale Bewegung erzeugt, wodurch der Abstreifkörper sich in Drehrichtung vom angesammelten Schmutz weg bewegt. Ein Liegenbleiben des Schmutzes in der durch Spaltzylinder und Abstreifkörper gebildeten Kante wird dadurch vermieden. Nach dem Ausspülen des Schmutzes, das durch eine weitere Drehung des Spaltzylinders um 360° unterstützt werden kann, wird durch Schließen des Absperrorgans 18 die umgekehrte Strömung unterbrochen und durch Verdrehen des Stellglieds auch im Bereich des Spülkanals 5 die normale Filterströmung wieder hergestellt.

Fig. 3 zeigt die Stirnplatte 20, eine gegenüberliegende zweite Stirnplatte 19 und den gegenüber diesen verdrehbaren Spaltzylinder 4. In der linken Stirnfläche 20 ist die Ausspülöffnung 17 und dahinter das Absperrorgan 18 erkennbar. Die Stirnflächen sind durch zueinander in etwa einem der Länge der Spülkanalwandung 6 entsprechenden Abstand fixiert. Die gehäusefesten Stirnplatten sind im Normalfall nicht selber Teile des Gehäuses, sondern nur die Widerlager für die Drehachsen sowie für die Stangen 8, 9, 10, 11 und selbst als Gesamtheit mit dem Filtereinsatz 1 aus dem Gehäuse des Filters herausziehbar ausgeführt. Dadurch braucht nach Kontrolle des Filtereinsatzes auf die Beschädigung o. dgl. der Spülkanalwandung 6 nicht gegenüber dem Filtereinsatz 1 neu fixiert zu werden.

## Patentansprüche

1. Spaltfilter für Schmieröl o. dgl. mit partieller Rückströmung zur Selbstreinigung, mit einem zylindrischen Gehäuse und einem darin drehbaren zylindrischen Filtereinsatz (1), je einer außerhalb der Mantelfläche des Filtersatzes (1) im Gehäuse angeordneten Zuström- und Ausspülöffnung (17) sowie einer an einer Stirnfläche des Filtereinsatzes im Gehäuse angeordneten Abströmöffnung, einem längs eines Mantelbereichs des Filtereinsatzes (1) anliegenden Abstreifkörper und einer ein Segment des Filtereinsatzes umfassenden, zur Ausspülöffnung (17) offenen Spülkanalwandung (6) mit U-förmigem Querschnitt, dadurch gekennzeichnet, daß die Spülkanalwandung (6) mit dem in Drehrichtung hinteren Schenkel (12) den Abstreifkörper bildet und mit dem Filtereinsatz (1) in dauernder Berührung steht, daß die Spülkanalwandung (6) ein Verstellglied zum Abheben und Andrücken des vorderen Schenkels (13) an den Filtereinsatz (1) aufweist und daß die Ausspülöffnung (17) ein zum Spülvorgang freigebbares Absperrorgan (18) aufweist.

2. Spaltfilter nach Anspruch 1, dadurch gekennzeichnet, daß außerhalb des Spülkanals (5) eine gegen das Gehäuse abgestützte Feder (7) zum Andrücken der Spülkanalwandung (6) an den Filtereinsatz (1) angeordnet ist, daß innerhalb des Spülkanals (5) oder eines äußeren Ansatzes (15) an der Spülkanalwandung (6) sich ein mit einer achsparallelen Stange (8) drehbarer Nocken (14) zum Abheben der Spülkanalwandung (6) vom Filtereinsatz (1) befindet und daß die Spülkanalwandung (6) am beweglichen Schenkel (13) zumindest an den Stirnenden eine auf gehäusefesten Zapfen oder einer achsparallelen Stange (9) gleitende Führung (16) aufweist, die unter einem Winkel zur Radialen angeordnet und nach innen gegen den hinteren Schenkel (12) der Spülkanalwandung (6) geneigt ist.

3. Spaltfilter nach einem der Ansprüche 1 oder 2, dadurch gekennzeichnet, daß der als Abstreifkörper wirkende hintere Schenkel (12) der Spülkanalwandung (6) im Längsschnitt ein Oberflächenprofil aufweist, das das Oberflächenprofil eines Längsschnitts des Spaltzylinders (4) bis an die Filterspalte ergänzt.

## Claims

1. An edge filter for lubricating oil or the like, the filter being arranged, for self-scavenging purposes, for a partial return flow and comprising: a cylindrical vessel, a cylindrical filter element (1) rotatable therein, one each flow inlet and scavenging-current opening (17) arranged in the vessel at a distance from the peripheral wall of the filter element (1), a flow outlet also arranged in the vessel on a front disc of the filter element (1), a stripper bearing lengthwise on a portion of the peripheral wall of the filter element (1) and a cross-sectionally U-shaped scavenging-duct wall (6) encompassing a segment of the filter element and being in communication with the scavenging-current opening (17), characterized in that the scavenging-duct wall (6) with its — in rotational direction, trailing — leg (12) forms the stripper and by means thereof is in constant contact with the filter element (1), that the scavenging-duct wall (6) is provided with a control member for lifting its leading leg (13) off or pressing it against the filter element (1), and in that the scavenging-current opening (17) is provided with a shut-off element (18) openable for starting the scavenging process.

2. An edge filter according to claim 1, characterized in that a spring (7) supported by the vessel and serving to press the scavenging-duct wall (6) against the filter element (1) is arranged outside the scavenging duct (5), that a cam (14) turnable by a paraxial rod (8) and serving to lift the scavenging-duct wall (6) off the filter element (1) is disposed inside the scavenging-duct (5) or within an external extension (15) of the scavenging-duct wall (6), and in that the liftable leg (13) of the scavenging-duct wall (6) is provided, at least in the region of the front discs, with a guide (16) which is slidable on a vessel-mounted peg or a paraxial rod (9), which is arranged at an angle in relation to the radius and which is inwardly inclined towards the trailing leg (12) of the scavenging-duct wall (6).

3. An edge filter according to claim 1 or claim 2, characterized in that the scavenging-duct wall's (6) trailing leg (12) — in a longitudinal cross-sectional view thereof — serving as the strippper complements that of the filter element cylinder (4) — in a longitudinal crossectional view thereof — up to the filter gap.

## Revendications

1. Filtre à arêtes pour de l'huile de graissage ou analogue avec écoulement en retour, partiel pour l'auto-nettoyage, comportant un boîtier cylindrique et un élément de filtre (1) cylindrique tournant dans le boîtier, respectivement un orifice d'alimentation et de sortie de nettoyage (18) prévu dans le boîtier à l'extérieur de la surface-enveloppe de l'élément de filtre (1), ainsi qu'un orifice d'évacuation prévu dans le boîtier, sur une surface frontale de l'élément de filtre (1), un corps de raclage s'appliquant le long d'une zone d'enveloppe de l'élément de filtre (1) ainsi qu'une paroi de canal de nettoyage (6), à section en forme de U, ouverte vers l'orifice de sortie de nettoyage (17) et englobant un segment de l'élément de filtre, filtre caractérisé en ce que la paroi du canal de nettoyage (6) forme l'organe de raclage par sa branche arrière (12) (dans le sens de rotation) et est en contact permanent avec l'élément de filtre (1), et en ce que la paroi du canal de nettoyage (6) comporte un organe de réglage pour soulever et appuyer la branche avant (13) sur l'élément de filtre (1) et en ce que l'orifice de sortie de nettoyage (17) comporte un organe d'arrêt (18) mobile librement pour l'opération de nettoyage.

2. Filtre à arêtes selon la revendication 1, caractérisé en ce qu'en dehors du canal de nettoyage (5), il est prévu un ressort (7) appuyé contre le boîtier pour appuyer la paroi du canal de nettoyage (6) contre l'élément de filtre (1), en ce qu'à l'intérieur du canal de nettoyage (5) ou d'un épaulement extérieur (15) sur la paroi du canal de nettoyage (6), il est prévu une came (14) rotative, avec une tige (8) parallèle à l'axe, et qui comporte pour soulever la paroi du canal de nettoyage (6) sur la branche mobile (13), au moins aux extrémités frontales, un moyen de guidage (16) glissant sur des goujons solidaires du boîtier ou sur une tige (9) parallèle à l'axe, en faisant un angle par rapport à la direction radiale, et en étant incliné vers l'intérieur vers la branche arrière (12) de la paroi (6) du canal de nettoyage.

3. Filtre à arêtes selon l'une des revendications 1 ou 2, caractérisé en ce que la branche arrière (12) de la paroi du canal de nettoyage (6), qui joue le rôle d'organe de raclage, présente en coupe longitudinale un profil de surface supérieur qui complète le profil de surface supérieur d'une coupe longitudinale du cylindre à arêtes (4) jusqu'à l'arête du filtre.

Fig.1

Fig. 2

A-B

Fig.3